Europäisches Patentamt

European Patent Office

Office européen des brevets

(11) Publication number: **0 133 998**
A2

(12) **EUROPEAN PATENT APPLICATION**

(21) Application number: **84109189.5**

(22) Date of filing: **02.08.84**

(51) Int. Cl.⁴: **F 02 D 41/00**

(30) Priority: **03.08.83 JP 141068/83**

(43) Date of publication of application: **13.03.85**
Bulletin 85/11

(84) Designated Contracting States: **CH DE FR GB IT LI NL SE**

(71) Applicant: **HITACHI, LTD., 6, Kanda Surugadai 4-chome Chiyoda-ku, Tokyo 100 (JP)**

(72) Inventor: **Kashiwaya, Mineo, 2920-19, Mawatari, Katsuta-shi Ibaraki-ken (JP)**
Inventor: **Morita, Kiyomi, 1181-100, Higashiishikawa, Katsuta-shi Ibaraki-ken (JP)**
Inventor: **Sakamoto, Masahide, 2-1034, Higashiishikawa, Katsuta-shi Ibaraki-ken (JP)**

(74) Representative: **Patentanwälte Beetz sen. - Beetz jun. Timpe - Siegfried - Schmitt-Fumian, Steinsdorfstrasse 10, D-8000 München 22 (DE)**

(54) Apparatus for and method of controlling an internal combustion engine.

(57) An apparatus for and method of controlling an internal combustion engine including means (15; 44) for controlling fuel supplied from a fuel injector (14) disposed to intake air passage (5, 6) to the engine in accordance with intake air, means (14) for supplying additional fuel to the engine, means (15; 46) for controlling ignition timing of the engine and means (15; 42, 46) for correcting the ignition timing is disclosed. At the time of acceleration, additional fuel is supplied to the engine and then, in order to prevent occurrence of backfire or knock in the engine, the ignition timing is corrected in accordance with the temperature of the engine so that the ignition timing is more advanced at lower temperature when the temperature of the engine is lower than a predetermined temperature and more retarded at higher temperature when the temperature of the engine is higher than another predetermined temperature.

TITLE OF THE INVENTION:

Apparatus for and method of controlling an internal combustion engine.

BACKGROUND OF THE INVENTION:

The present invention relates to an apparatus for and a method of controlling an internal combustion engine, and more particularly to an apparatus for and a method of electronic controlling an internal combustion engine which is possible to prevent occurrence of backfire or knock in the engine during the acceleration of the engine.

In an internal combustion engine, air-fuel mixture is supplied to the engine. Air-fuel ratio of the air-fuel mixture is fixed to a predetermined ratio in order to operate the engine at a higher efficiency. Therefore, it is neccessary to control the quantity of the fuel supplied to the engine in accordance with the quantity of intake air taken in the engine.

When a rapid acceleration of the engine is required, the air-fuel mixture becomes lean because the quantity of the intake air is rapidly increased but the fuel does not increase so rapidly that the intake air is increased. Thereby, the engine torque is often temporarily reduced. As a result, the rapid acceleration of the engine based on the requirement of the operator can not be performed.

For solving this problem, as described in USP 4,363,307, additional acceleration fuel supply is taken place. That is, additional fuel is supplied to the engine in addition to the normal fuel supply at a time of rapid acceleration.

In this additional acceleration fuel supply, it becomes clear that problems exist when the temperature of the engine is lower than certain temperature or the temperature is higher than another certain temperature. That is, when the temperature of the engine is lower than certain temperature, backfire may occur and when the temperature of the engine is higher than another certain temperature, knock in the engine may occur.

SUMMARY OF THE INVENTION:

An object of the invention is to provide an apparatus for and a method of controlling an internal combustion engine which is able to prevent occurrence of backfire or knock in the engine during the acceleration operation.

As a result of inventers' experiment, it becomes clear that the occurrence of the back fire and knock in the engine on an additional acceleration fuel supply is prevented by adjusting a ignition timing in accordance with the temperature of the engine.

In the present invention, when the temperature of the engine is lower than a predetermined temperature, the ignition timing is so advanced in accordance with the temperature of the engine that ignition timing is more advanced at lower temperature, and when the temperature of the engine is higher than another predetermined temperature, the ignition timing is so retarded in accordance with the temperature of the engine that ignition timing more retarded at higher temperature.

If the additional acceleration fuel supply is done when the temperature of the engine is low, the fuel supplied to the engine may not be burned completely during the ignition step or misfire may occur in the engine because the burning activity of the fuel is low. Therefore, the exhaust gas including fuel which has not been burned in the engine is exhausted from the engine to the exhaust manifold. Backfire may occur in this con dition. In this invention, it is given enough time for the ignition step because the ignition timing is more advanced at low temperature according to the temperature. Therefore, it is reduced the possibility that the backfire occurs.

If the additional acceleration fuel supply is done when the temperature of the engine is high, the fuel supplied to the engine is burned quickly when it is ignited because the burning activity of the fuel is high. Therefore, power which is against to the motion of the piston is added to the piston before the piston has reached to the upper dead point, thereby knock is occurred. In this case, the occurrence of the knock is prevented by retarding the ignition timing according to the temperature of the engine.

BRIEF DESCRIPTION OF THE DRAWINGS:

Fig. 1 is a system diagram showing an embodiment of the present invention;

Fig. 2 is a block diagram showing an electronic control circuit 15 in Fig. 1;

Fig. 3 is a flow chart showing the tasks carried out in the electronic control circuit 15;

Fig. 4 is a characteristic diagram showing the relationship between water temperature and correction value of ignition timing.

BRIEF DESCRIPTION OF THE PREFERRED EMBODIMENTS:

An electronic control apparatus for internal combustion engine according to the present invention will now be described with reference to the accompanying drawings.

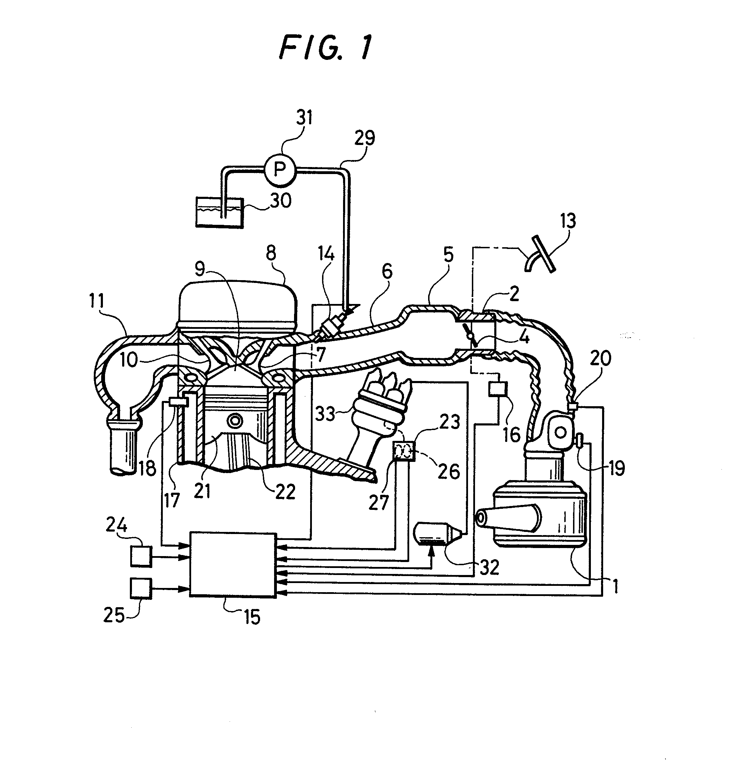

Referring to Fig. 1, the quantities of air taken from an air cleaner 1 is controlled by a throttle valve 4 which is provided to a throttle body 2 and linked to an acceleration pedal 3 which is operated by drivers, and then the air is supplied to a combustion chamber 9 of an internal combustion engine 8 through a surge tank 5, an intake manifold 6 and a intake valve 7.  Air-fuel mixture which is burned in the combustion chamber 9 is exhausted to the atmosphere through an exhaust valve 10 and an exhaust manifold 11.  A fuel injector 14 is provided to the intake manifold 6 corresponding to the combustion chamber 9.  It is also possible to provide a fuel injector to the upstream side of the throttle valve 4.

An electronic control circuit 15 is being comprised a micro processor as a calculating circuit, read only memory (ROM), random access memory (RAM) and input-output apparatus (I/O port).  The electronic control circuit 15 receives input signals from idle switch 16 detecting closing state of the throttle valve 4, a water temperature sensor 18 being fixed to the water jacket 17, a hot wire type air flow meter 19 for measuring the quantities of the intake air, intake air temperature sensor 20 for detecting the temperature of the intake air, a rotation angle sensor 23 for detecting a rotation angle of a distributor 33 connected to a crank shaft (not shown) in order to detect the rotation angle of the crank shaft connected to the piston 21 through a connecting rod 22, ignition switch 24 and starter switch 25.

The rotation angle sensor 23 is composed of a position detector 26 which generates pulses at every two rotation of the crank shaft and an angle detector 27 which produces pulses at every predetermined crank angle, for example, 30°.

Fuel is pressurized by a fuel pump 31 and transmitted from a fuel tank 30 to the fuel injector 14 through fuel pasage 29. The electronic control circuit 15 calculates quantities of the fuel injection and fuel injection timing and sends the fuel injection pulses to the fuel injector 14, and calculates ignition timings and sends current to the ignition coil 32. Secondary current of the ignition coil 32 is sent to the distributor 33 and distributed to each ignition plug which is provided in the combustion chamber 9 through the distributor 33.

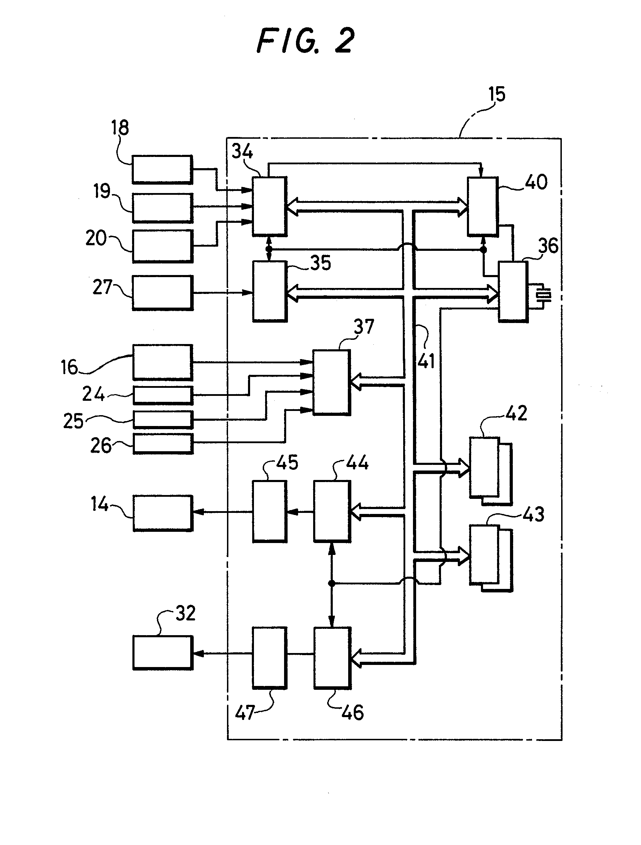

Fig. 2 shows a block diagram of the electronic control circuit 15. The outputs of the water temperature sensor 18, the air flow meter 19 and the intake air temperature sensor 20 are sent to an A/D converter 34 and converted to digital signals. A rotation detecting circuit 35 includes a gate which is opened or closed by pulses sent from the angle detector 27 of the rotation angle sensor 23 and a counter which counts clock pulses sent from a clock pulse generator 36 through this gate, a value which is in inverse proportion to the number of the rotation is generated as an output of the counter.

The outputs of the idle switch 16, the ignition switch 24, the starter switch 25 and the position detector 26 of the rotation angle sensor 23 are temporarily stored in a latch circuit 37. The micro processor 40 is connected to the ROM 42, the RAM 43, the A/D converter 34, the rotation detecting circuit 35 and the latch circuit 37 through a buss line 41 and calculates the quantities of the fuel to be injected under certain program. Values which are in proportion to the quantities of the fuel to be injected are memorized in a fuel injection control circuit 44. An output pulse of the fuel injection control circuit 44 is formed when the memorized value coincides with the clock pulse and then the output pulse is sent to the fuel injector 14 through driving circuit 45.

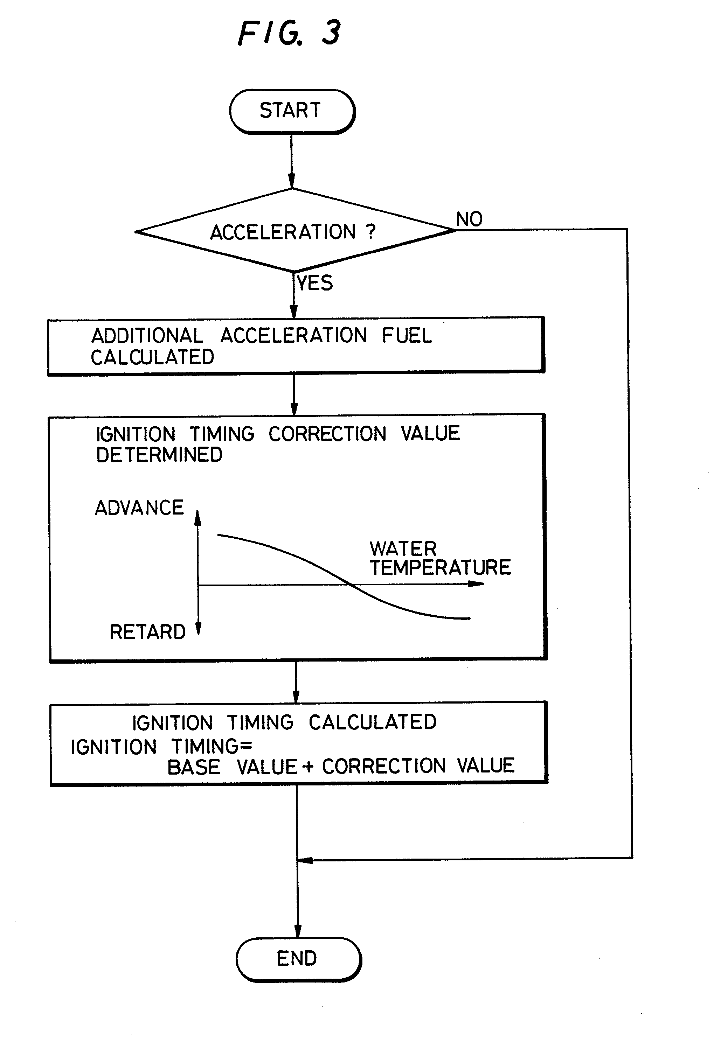

In this arrangement, an acceleration operation is described based on Fig. 3. In Fig. 3, whether it is acceleration condition or not is determined at a step 50. If it is not acceleration condition, normal operation is taken place. If it is acceleration condition, additional fuel to be injected is calculated and then additional acceleration fuel supply is done at a step 52.

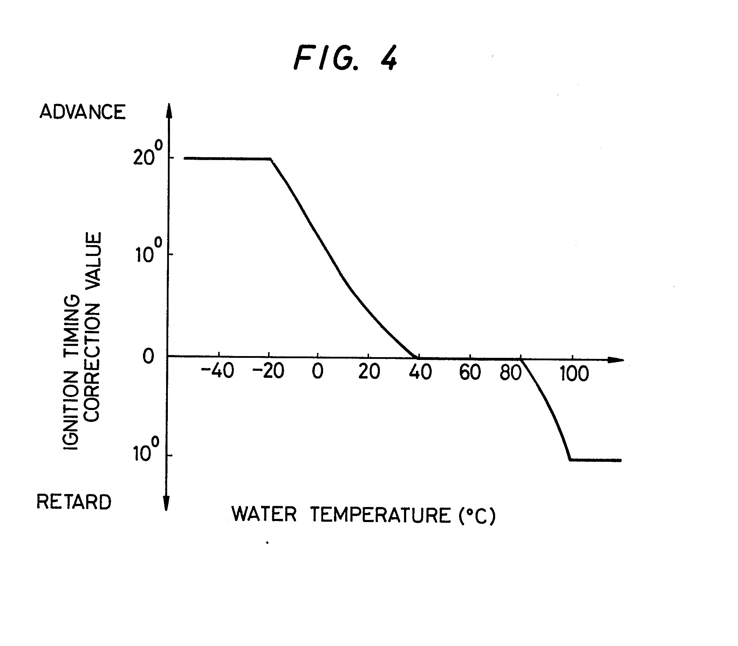

Next, at a step 54, an correction value is determined from a ignition timing correction map and which is in accordance with the temperature of the engine. it is preferable that the relationship between the temperature of the engine, that is, the water temperature and the correction value is determined according to the characteristic diagram shown in Fig. 4. In the case that the water temperature is lower than a predetermined temperature, that is, 40°C, the correction value is that advanced according to the water temperature but the advanced value is limited to at most 20°. On the other hand, when the water temperature is higher than another predetermined temperature, that is, 80°C, the correction value is that retarded according to the water temperature but the retarded value is limited to at most 10°. The correction map is stored in the ROM 42. And, at a step 56, the correction value is added to the base value of the ignition timing at that time and then the corrected ignition timing transmitted to the ignition coil is determined.

Now, the acceleration operation will be described referring to Fig. 2. The acceleration condition is detected, for example, when changes of the intake air flow which is detected by the air flow meter 19 are more rapid than a predetermined value. If the acceleration condition is detected, a signal is transmitted to the fuel injection control circuit 44, an additional pulse is transmitted from the fuel injection control circuit 44 to the fuel injector 14, and then additional fuel is injected from the fuel injector 14. On the other hand, the acceleration signal is transmitted to the ignition timing control circuit 46, the correction value of the ignition timing is determined according to the ignition timing correction map stored in the ROM 42 in accordance with the water temperature signal detected by the water temperature sensor 18, and then the ignition pulse of the corrected ignition timing which is gotten by adding the correction value to the base value is transmitted from ignition timing control circuit 46 to the ignition coil 32 through the driving circuit 47.

By this arrangement, it can be prevented to occur backfires at low temperature of the engine and knock at high temperature. Therefore, good acceleration of the engine is performed in accordance with the acceleration requirement of the operator.

WHAT IS CLAIMED IS:

1.      An apparatus for controlling an internal combustion engine, comprising:

a fuel control means (15; 44) for controlling fuel supplied from a fuel injector disposed to intake air passage (5, 6) to said engine in accordance with intake air taken in said engine;

an additional fuel supply means (14) for supplying additional fuel to said engine at a time of acceleration of said engine;

an ignition timing control means (15; 46) for controlling ignition timing of said engine; and

an ignition timing correction means (15; 42, 46) for correcting the ignition timing when said additional fuel supply means has supplied the additional fuel, wherein the ignition timing is so corrected in accordance with the temperature of said engine that the igniting timing is more advanced at lower temperature when said temperature of said engine is lower than a predetermined temperature.

2.      The apparatus for controlling an internal combustion engine according to Claim 1, the temperature of said engine is detected by detecting water temperature of said engine.

3.      The apparatus for controlling an internal combustion engine according to Claim 1, in said ignition timing correction means (15, 42, 46), the ignition timing is so corrected in accordance with the temperature of said engine that said ignition timing is more retarded at higher temperature when the temperature of said engine is higher than another predetermined temperature which is higher than the predetermined temperature.

4.      In a method of controlling an internal combustion engine including a fuel control means for controlling fuel supplied from a fuel injector disposed to intake air passage to said engine in accordance with intake air taken in said engine, an additional fuel supply means for supplying additional fuel to said engine, an ignition timing control means for controlling ignition timing of the engine and an ignition timing correction means for correcting said ignition timing,

said method of controlling said internal combustion engine comprising the steps of:

supplying additional fuel at the time of acceleration; and

correcting the ignition timing in accordance with the temperature of said engine when the additional fuel is supplied so that ignition timing is more advanced at lower temperature when the temperature of said engine is lower than a predetermined temperature.

5.      The method of controlling an internal combustion engine according to Claim 4, said correcting step further includes the step that the ignition timing is so retarded in accordance with the temperature of said engine that the ignition timing is more retarded at higher temperature when the the temperature of said engine is higher than another predetermined temperature which is higher than the predetermined temperature.

FIG. 1

FIG. 2

3/4

0133998

# FIG. 3

```
           START

        ACCELERATION ?  ──NO──┐
              │                │
             YES               │
              │                │
   ┌──────────────────────────┐│
   │ ADDITIONAL ACCELERATION  ││
   │ FUEL CALCULATED          ││
   └──────────────────────────┘│
              │                │
   ┌──────────────────────────┐│
   │ IGNITION TIMING          ││
   │ CORRECTION VALUE         ││
   │ DETERMINED               ││
   │                          ││
   │ ADVANCE                  ││
   │     ↑                    ││
   │     │        WATER       ││
   │     │        TEMPERATURE ││
   │     └──────────→         ││
   │                          ││
   │ RETARD ↓                 ││
   └──────────────────────────┘│
              │                │
   ┌──────────────────────────┐│
   │ IGNITION TIMING          ││
   │ CALCULATED               ││
   │ IGNITION TIMING=         ││
   │ BASE VALUE +             ││
   │ CORRECTION VALUE         ││
   └──────────────────────────┘│
              │                │
              │←───────────────┘
              │
            END
```

# FIG. 4